# FASCICULE DE BREVET EUROPEEN

(11) **EP 0 490 789 B1**
(45) Date de publication et mention de la délivrance du brevet: **18.09.1996**
(21) Numéro de dépôt: 91420433.4
(22) Date de dépôt: 03.12.1991
(51) Int. Cl.: B01D 63/02, B29C 69/00, B29C 53/56

(54) **Procédé et dispositif de fabrication de faisceaux de fibres creuses semi-perméables pour appareils à membrane**
Verfahren und Vorrichtung zur Herstellung von halbdurchlässigen Hohlfaserbündeln für Membranvorrichtungen
Process and apparatus for manufacturing bundles of hollow semipermeable fibres for membrane apparatus

(30) Priorité: 11.12.1990 FR 9015744
(43) Date de publication de la demande: 17.06.1992
(73) Titulaire: HOSPAL INDUSTRIE, F-69883 Meyzieu Cédex (FR)
(72) Inventeur: Porta, Julien, F-38230 Chavanoz (FR)

(56) Documents cités:
- EP-A- 0 093 677
- EP-A- 0 200 158
- EP-A- 0 261 728
- WO-A-83/00098
- FR-A- 2 242 129
- PATENT ABSTRACTS OF JAPAN vol. 8, no. 156 (C-234)(1593) 19 Juillet 1984 & JP-A-59 062 306 ( TEIJIJN K.K. ) 9 Avril 1984

## Description

La présente invention concerne un procédé et un dispositif de fabrication de faisceaux de fibres creuses semi-perméables pour appareils à membrane.

L'invention concerne plus particulièrement la fabrication de faisceaux de fibres creuses destinés à constituer la membrane d'appareils du type échangeurs dans lesquels la membrane délimite deux compartiments où l'on fait circuler des fluides de nature différente dans le but de provoquer des transferts par diffusion et/ou par convection d'un fluide vers l'autre. A titre d'exemple, on peut citer les hémodialyseurs, qui sont utilisés pour purifier le sang de patients souffrant d'insuffisance rénale.

Pour une membrane de nature donnée, l'efficacité d'un échangeur est principalement liée à la façon dont le faisceau de fibres est structuré, cette efficacité étant maximale lorsque le fluide circulant à l'extérieur de fibres est contraint de circuler de façon homogène entre les fibres et ne peut se frayer de chemins préférentiels dans le faisceau.

Le brevet européen 0 093 677 décrit un procédé de fabrication de faisceaux de fibres creuses permettant d'obtenir des faisceaux ayant une structure optimale sous le rapport des échanges entre fluides dans les appareils où ils sont montés. Ce procédé consiste à former une nappe de fibres sur un tambour de section polygonale en enroulant une fibre sur le tambour tout en lui faisant subir un mouvement de va-et-vient régulier d'une extrémité du tambour à l'autre. La nappe tubulaire ainsi obtenue est donc constituée de plusieurs couches de spires, les spires d'une couche faisant un angle sensiblement constant avec les spires des couches adjacentes. Une fois formée, la nappe est immobilisée sur le tambour au niveau de chacune des arêtes du tambour, puis est découpée le long de ces arêtes en autant de portions de nappe que la section polygonale du tambour comporte de côtés. Les portions de nappe sont ensuite désolidarisées du tambour puis enroulées individuellement sur elles-mêmes autour d'un axe perpendiculaire aux traits de coupe pour former des faisceaux de fibres creuses prêts à être montés dans des boîtiers d'appareils à membrane.

La fabrication des faisceaux de fibres creuses à partir de la nappe formée sur le tambour conformément à ce procédé exige un nombre assez important de manipulations, ce qui est préjudiciable au plan du rendement industriel et de l'homogénéité des faisceaux fabriqués. En outre, ce procédé nécessite de disposer d'autant de tambours que de faisceaux de longueurs différentes à fabriquer; sauf à jeter des quantités de fibres importantes lors de la fabrication de faisceaux de taille réduite.

Le but de la présente invention est d'améliorer ce procédé.

Pour atteindre ce but, on prévoit un procédé de fabrication d'une pluralité de faisceaux de fibres creuses semi-perméables pour appareils à membrane à partir d'une nappe de fibres formée par l'enroulement d'une fibre ou d'un toron de fibres sur un tambour, comprenant les étapes de :
- couper la nappe de fibres sur le tambour selon un trait de coupe sensiblement parallèle à l'axe du tambour ;
- étendre la nappe de fibres sur un plan ;
- enrouler la nappe de fibres sur elle-même selon une direction perpendiculaire au trait de coupe pour former un faisceau de fibres unique ;
- tronçonner le faisceau de fibres unique en une pluralité de faisceaux pour appareils à membrane.

Conformément à une caractéristique du procédé selon l'invention, le faisceau de fibres unique est placé dans un fourreau avant d'être tronçonné en une pluralité de faisceau de fibres. Avantageusement, un film souple destiné à former le fourreau pour contenir le faisceau de fibres est déposé sur le plan préalablement à l'étape de déroulement de la nappe de fibres sur le plan, de façon que ce film, à la fin de l'étape d'enroulement de la nappe de fibres sur elle-même, enveloppe le faisceau de fibres, le film étant ensuite fermé sur lui-même par assujettissement de ses bords longitudinaux l'un à l'autre.

Conformément à une autre caractéristique du procédé selon l'invention, l'étape d'enrouler la nappe de fibres sur elle-même consiste à :
- étendre la nappe de fibres sur une pièce de matériau en feuille souple ayant un bord fixe assujetti au plan parallèlement à la direction de déplacement relatif du tambour et du plan ;
- former un pli dans la pièce de matériau souple en feuille sensiblement parallèle au bord fixe de la pièce de matériau souple en feuille ;
- introduire un bord de la nappe de fibres dans ce pli, et
- déplacer le pli en direction du bord fixe de la pièce de matériau souple en feuille.

L'invention a également pour objet un dispositif pour la mise en oeuvre de ce procédé.

Ce dispositif de fabrication d'une pluralité de faisceaux de fibres creuses semi-perméables pour appareils à membrane à partir d'une nappe de fibres formée sur un tambour rotatif, qui comprend un organe de coupe pour ouvrir la nappe de fibres selon un trait de coupe sensiblement parallèle à l'axe de rotation du tambour, est caractérisé en ce qu'il comprend :
- des moyens pour transférer la nappe de fibres, une fois coupée, du tambour sur un plan, par déroulement de la nappe de fibres sur le plan selon une direction rectiligne ;
- des moyens pour maintenir la nappe de fibres plaquée au tambour sur une zone de ce tambour pendant le déroulement de la nappe de fibres sur le plan;
- des moyens pour former un faisceau de fibres unique à partir de la nappe de fibres mise à plat, par enroulement de la nappe de fibres sur elle-même autour d'un axe perpendiculaire au trait de coupe et constriction simultanée du faisceau de fibres en cours de formation ; et
- des moyens pour tronçonner le faisceau de fibres résultant de l'enroulement de la nappe de fibres sur elle-même en une pluralité de faisceauxde fibres pour appareils à membrane.
- des moyens pour dérouler la nappe de fibres sur un plan selon une direction rectiligne ;
- des moyens pour enrouler la nappe de fibres sur elle-même en un faisceau de fibres unique autour d'un axe perpendiculaire au trait de coupe ; et
- des moyens pour tronçonner le faisceau de fibres résultant de l'enroulement de la nappe de fibres sur elle-même en une pluralité de faisceaux pour appareils à membrane.

Conformément à une caractéristique du dispositif selon l'invention, les moyens pour dérouler la nappe de fibres sur un plan comprennent une table mobile par rapport au tambour selon une direction perpendiculaire à l'axe de rotation du tambour, cette table ayant un plateau définissant le plan sur lequel est déroulé la nappe de fibres. Le dispositif comprend en outre avantageusement des moyens pour synchroniser le déplacement linéaire de la table et la rotation du tambour lors du déroulement de la nappe de fibres sur la table.

Conformément à une autre caractéristique du dispositif selon l'invention,les moyens pour enrouler la nappe de fibres sur elle-même comprennent :
- une pièce de matériau souple en feuille ayant un bord fixe assujetti au plan parallèlement à la direction de déroulement de la nappe de fibres sur le plan ;
- des moyens pour former, dans cette pièce de matériau souple en feuille, un pli sensiblement parallèle à ce bord fixe, et pour déplacer ce pli selon une direction perpendiculaire à la direction de déroulement de la nappe de fibres sur le plan. Ces moyens comprennent en outre avantageusement des moyens pour régler le diamètre du faisceau de fibres formé dans le pli.

D'autres caractéristiques et avantages de l'invention apparaîtront à la lecture de la description qui va suivre. On se reportera aux dessins annexés sur lesquels :
- La figure 1 est une vue en élévation schématique d'un dispositif pour fabriquer des faisceaux de fibres creuses selon l'invention ;
- La figure 2 (a, b) est une vue en perspective d'un tambour pour le dispositif selon l'invention représenté dans deux étapes de fabrication différentes ;
- La figure 3 est une vue en perspective d'une partie du dispositif selon l'invention ;
- La figure 4 est une vue en perspective schématique partielle d'une autre partie du dispositif selon l'invention ; et
- La figure 5 (a, b, c, d) illustre de façon schématique une phase du déroulement du procédé selon l'invention.

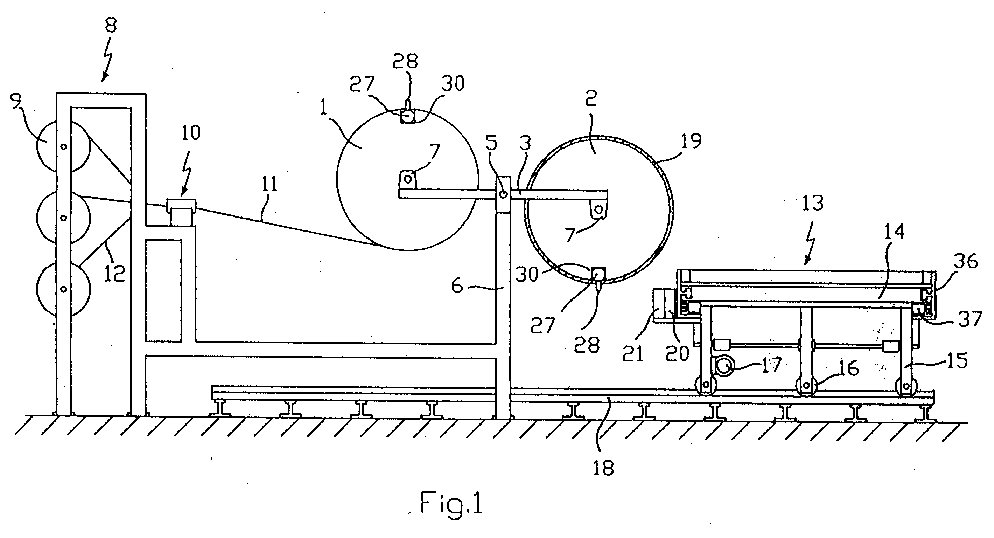

Le dispositif de fabrication de faisceaux de fibres creuses représenté sur la figure 1 comprend deux tambours cylindriques 1, 2, identiques, couplés parallèlement l'un à l'autre par deux barres 3, 4 parallèles, perpendiculaires aux axes respectifs des tambours. L'ensemble est monté pivotant autour d'un axe 5 parallèle aux axes des tambours 1, 2 sur un support fixe 6. Les tambours 1, 2 sont assujettis aux barres 3, 4 par l'intermédiaire de paliers 7 grâce auxquels ils peuvent tourner autour de leurs axes respectifs. Les paliers 7 sont fixés aux barres 3, 4 de façon que la paire de paliers supportant le tambour 1 et la paire de paliers supportant le tambour 2 soient disposées de part et d'autre d'un plan passant par l'axe longitudinal des barres 3, 4. De la sorte, lorsque les barres 3, 4 sont immobilisées dans un plan horizontal, le tambour 1 est décalé vers le haut par rapport au tambour 2 (position représentée sur la figure 1 ; dans la suite, les chiffres de repère 1 et 2 seront utilisés pour identifier les tambours dans cette position spécifique, ces tambours étant par ailleurs identiques, comme cela a été mentionné plus haut). Un moteur (non représenté) permet d'entraîner en rotation le tambour 1, le tambour 2 étant alors libre de tourner autour de son axe. Un autre moteur (non représenté) permet de permuter la position des tambours 1, 2 par rotation dans le sens inverse des aiguilles d'une montre, autour de l'axe 5, de l'ensemble tambours 1, 2 - barres de couplage 3, 4.

Un dévidoir 8 prévu pour recevoir plusieurs bobines 9 de fibre est disposé en regard du tambour 1. Un organe de trancannage 10 classique est intercalé entre le dévidoir 8 et le tambour 1. Cet organe de trancannage comprend un guide monté sur un chariot mobile selon un mouvement de va-et-vient parallèle à l'axe du tambour 1. Dans le guide est passé un toron 11 de fibres (ou de torons de fibres) constitué par la réunion, en amont de l'organe de trancannage, des fibres 12 (ou des torons de fibres) provenant des bobines 9. L'extrémité libre du toron 11 est fixée au tambour 1 pour y être enroulée en spirale lorsque le tambour 1 est entraîné en rotation et que le chariot de l'organe de trancannage est en mouvement.

Le dispositif selon l'invention comprend également une table roulante 13 motorisée équipée de divers accessoires pour recevoir une nappe de fibres 19 après qu'elle a été formée sur le tambour 1 et pour la transformer en un faisceau de fibres.

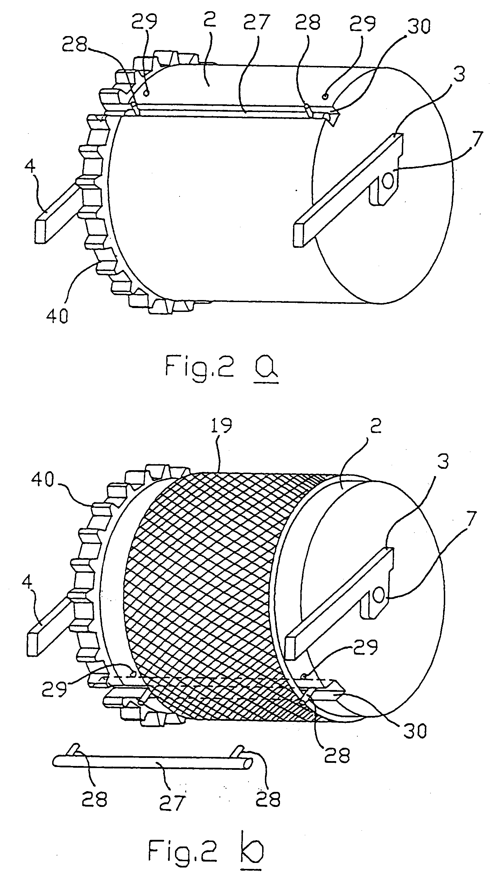

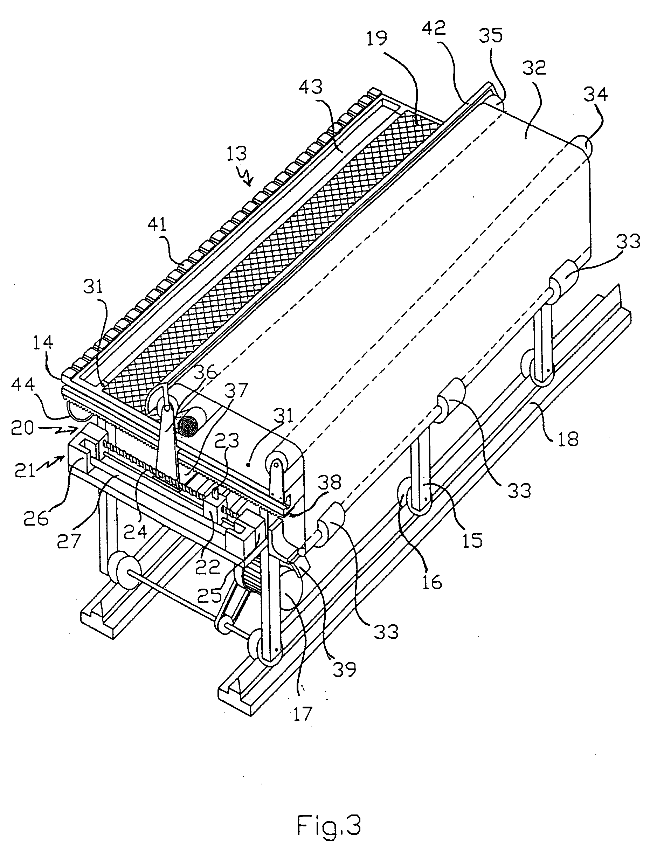

La table roulante 13 comprend un plateau 14 monté sur un piétement 15 muni de roulettes à gorge 16 dont une paire est entraînée par un moteur 17. Les roulettes sont prévues pour rouler sur deux rails parallèles 18 de section correspondante (triangulaire sur les dessins) qui s'étendent perpendiculairement aux axes des tambours 1, 2, en partie sous ceux-ci. Leur longueur et leur disposition par rapport aux tambours 1, 2 sont choisies pour permettre à la table 13 un déplacement au moins compris entre deux positions limites où respectivement chacune des extrémités de la table se trouve à l'aplomb de l'axe du tambour 2. La longueur et la largeur du plateau 14 sont respectivement au moins égales à la circonférence et à la largeur des tambours 1, 2, cette circonférence étant par ailleurs avantageusement choisie pour être égale à un multiple commun aux longueurs respectives (différentes) de faisceaux de fibres pour des appareils à membrane ayant des surfaces de membrane différentes. La hauteur du plateau 14 est choisie pour que, lorsque le tambour 2 surplombe la table, les barres 3, 4 étant donc horizontales, la nappe 19 formée sur le tambour 2 soit sensiblement tangente à la surface supérieure du plateau 14. Dans cette position, tout déplacement de la table entraîne la rotation du tambour 2, les tambours étant munis à une de leurs extrémités d'une denture 40 (voir figure 2) pour coopérer avec une crémaillère 41 (voir figure 3) disposée sur le plateau 14 le long de son bord longitudinal correspondant, la denture 40 et la crémaillère 41 constituant des moyens de synchronisation mécanique de la rotation du tambour 2 et de la translation de la table 13.

A l'avant de la table 13 (défini comme l'extrémité de la table 13 orientée vers les tambours 1, 2) sont assujettis au piétement 15, côte-à-côte, en avancée par rapport au bord du plateau 14, un organe de coupe 20 pour une nappe de fibres 19 présente sur le tambour 2 et un organe 21 de mise en place sur le tambour 2 d'un moyen pour maintenir la nappe de fibres 19 appliquée au tambour à proximité d'une zone où passera le trait de coupe. L'organe de coupe 20 comprend un chariot mobile 22 supportant une lame rétractable 23 dont le tranchant est orienté vers le haut. Le chariot 22 est mis en mouvement selon une direction parallèle à l'axe du tambour 2 par tout moyen approprié, une vis sans fin 24 entraînée par un moteur 25 par exemple. La course verticale de la lame 23 est prévue pour que, le dispositif de coupe 20 étant sensiblement à l'aplomb de l'axe du tambour 2, la lame 23 n'effleure pas la nappe 19 formée sur le tambour 2 quand elle est rétractée et tangente le tambour quand elle est saillante.

L'organe 21 comprend deux éléments élévateurs 26 destinés à pousser vers le haut, au niveau de chacune de ses extrémités, une barre 27 constituant le moyen, mentionné plus haut, pour maintenir la nappe de fibres 19 appliquée sur le tambour 2 à proximité de la zone où passera le trait de coupe. Comme on peut le voir sur la figure 2, la barre 27 est munie, à chacune de ses extrémités, d'un téton 28 prévu pour pénétrer et être verrouillé, par des moyens de verrouilage magnétiques par exemple, dans un orifice 29 correspondant du tambour. Lorsque la barre 27 est verrouillée sur un tambour où une nappe de fibres 19 est formée, elle exerce sur celle-ci une légère pression suffisante pour la maintenir plaquée au tambour après qu'elle a été coupée par l'organe de coupe 20 selon un trait de coupe parallèle à l'axe du tambour, voisin de la zone où la barre 27 fait pression.

Le dispositif comprend un second moyen pour immobiliser la nappe 19, en vue de sa coupe, sur une zone proche de la zone définie par la barre 27, la nappe 19 étant coupée entre ces deux zones. Le second moyen est constitué par une autre barre 27 qui est mise en place dans une rainure 30 du tambour 1, 2 avant la formation d'une nappe de fibres 19 sur ce tambour et jusqu'au déroulement de la nappe 19, selon un processus qui sera explicité plus loin. La rainure 30 est parallèle à l'axe du tambour 1, 2 et proche des orifices 29. Elle contient des moyens de coincement élastiques de la barre 27 pour maintenir la barre dans une position où les tétons 28 font saillie radialement hors de la rainure 30 pour pouvoir, dans un stade ultérieur du procédé de fabrication, pénétrer et être verrouillés, par des moyens de verrouillage magnétiques par exemple, dans deux orifices correspondants 31 pratiqués dans le plateau 14 de la table 13 à proximité de son bord avant.

La table 13 est munie en outre de moyens pour enrouler sur elle-même, autour d'un axe parallèle à ses bords longitudinaux, une nappe 19 après qu'elle a été désolidarisée du tambour 2 et déposée à plat sur le plateau 14. Ces moyens comprennent une pièce 32 de matériau souple en feuille et des moyens pour y former un pli et déplacer ce pli de façon à y introduire un bord longitudinal de la nappe de fibres qui s'y enroule sur elle-même au fur et à mesure de l'avancement du pli.

La pièce 32 de matériau souple en feuille est rectangulaire et est fixée par un bord à proximité d'un bord longitudinal du plateau 14 selon une direction parallèle à la direction de déplacement de la table 13. Elle a une étendue suffisante pour couvrir le plateau sur la majeure partie de sa surface, les orifices 31 étant laissés dégagés, et pour pendre le long du bord opposé du plateau 14 après avoir passé sur un rouleau de renvoi 34 disposé le long de ce bord. Le bord longitudinal libre de la pièce 32 est lesté par une barre à laquelle sont fixées des masses amovibles 33 dont le poids est choisi en fonction du diamètre que l'on souhaite donner au faisceau de fibres qui résultera de l'enroulement de la nappe de fibres.

Les moyens pour former et déplacer un pli longitudinal dans la pièce 32 de matériau souple en feuille, comprennent un rouleau 35 déplaçable parallèlement aux bords longitudinaux du plateau 14 et de même longueur, la pièce 32 passant sur le rouleau 35. Le rouleau 35 est maintenu à faible distance du plateau 14 par deux supports 36 montés pour pouvoir coulisser le long des bords transversaux respectifs du plateau 14. Chaque support 36 se prolonge sous le plateau 14 pour servir de nacelle à un moteur 37 entraînant une roue dentée qui engrène une crémaillère 38 fixée sous le plateau 14 et s'étendant le long du bord transversal correspondant. Pour former le pli sous le rouleau 35, préalablement à l'enroulement de la nappe 19, des butées mobiles 39 fixées au piétement 15 permettent d'arrêter la barre lestant la pièce 32 pour que celle-ci ne soit plus sous-tension et présente un mou correspondant au pli. Un organe de mise en forme du pli, comprenant un volet 42 monté pour pivoter sur l'axe du rouleau 35, est prévu pour introduire sous le rouleau 35 le mou donné à la pièce 32, lequel, replié sur lui-même, constitue le pli.

Le long du bord de la pièce 32 qui est fixé au plateau 14, le plateau 14 comprend une ouverture rectangulaire 43 destinée à permettre au faisceau de fibres prisonnier du pli de la pièce 32 d'échapper à ce pli. Une goulotte 44 disposée sous l'ouverture 43 permet de recueillir le faisceau ainsi formé en vue de son traitement ultérieur.

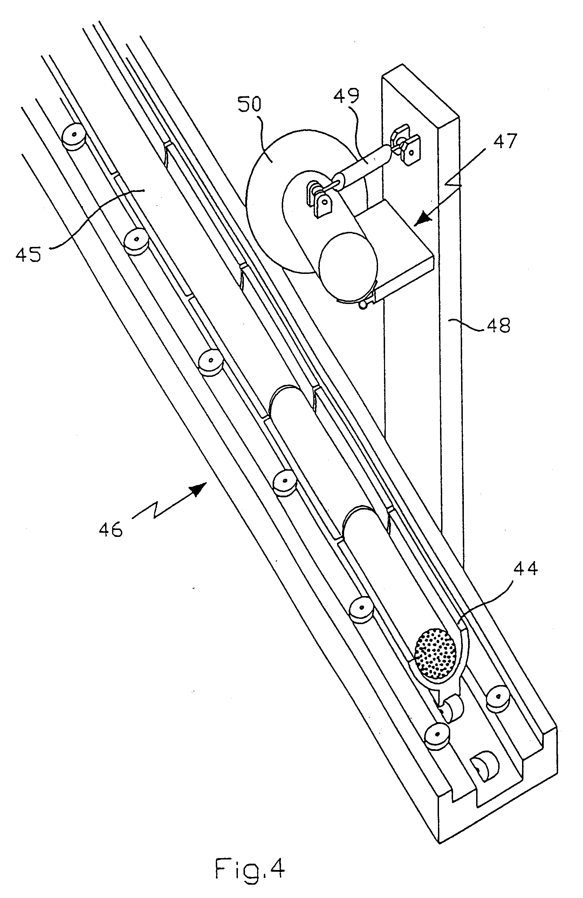

Sur la figure 4, on voit que la goulotte 44 pour le recueil d'un faisceau de fibres unique 45 formé sur la table 13 constitue la partie mobile d'un convoyeur 46, muni de moyens d'entraînement pas à pas, de pas réglable, pour déplacer le faisceau de fibres 45 en regard de moyens de tronçonnage du faisceau 45. Les moyens de tronçonnage comprennent une scie circulaire 47 montée pivotante sur un support 48 latéral au convoyeur 46 pour pouvoir, sous l'action d'un vérin à double effet 49, être abaissée en direction du convoyeur 46, couper le faisceau de fibres 45 et être ramenée à sa position initiale, la lame 50 de cette scie étant dans un plan perpendiculaire à la direction de déplacement du convoyeur 46 et la goulotte étant interrompue, pour laisser le passage à la lame, à des intervalles réguliers correspondant au pas du convoyeur 46. Selon la longueur des faisceaux que l'on souhaite, on utilise des goulottes interrompues selon des intervalles correspondants, et on règle le pas du convoyeur 46 en conséquence.

Le fonctionnement du dispositif qui vient d'être décrit va maintenant être expliqué, à partir du démarrage du dispositif. Les tambours étant nus et occupant la position représentée sur la figure 1 (barres de couplage 3, 4 horizontales), un toron de fibres 11 est tiré jusqu'au tambour 1 où il est fixé. Le tambour 1 est alors mis en rotation dans le sens inverse des aiguilles d'une montre tandis que, simultanément, l'organe de trancannage est mis en marche. L'effet conjugué de la rotation du tambour 1 et du mouvement de va-et-vient de l'organe de trancannage 10 aboutit à la formation sur le tambour 1 d'une nappe de fibres 19 constituée par la superposition de couches de spires de toron de fibres, les spires d'une couche faisant un angle sensiblement constant avec les spires des couches immédiatement adjacentes, cet angle étant déterminé par la vitesse du chariot de l'organe de trancannage pour une vitesse de rotation donnée du tambour. Lorsque la nappe de fibres 19 sur le tambour 1 comprend le nombre de couches de spires désiré, le tambour 1 et l'organe de trancannage sont stoppés. La position des tambours est alors inversée par pivotement de l'ensemble tambours-barres de couplage autour de l'axe 5. Vers la fin du pivotement le toron de fibres 11 vient en contact du tambour nu 1 auquel il est fixé automatiquement et il est coupé entre les deux tambours. Dès que les tambours ont repris la position illustrée sur la figure 1, le processus de formation d'une nappe de fibres 19 sur le tambour 1 qui vient d'être décrit peut recommencer.

Simultanément, le processus de traitement de la nappe 19 présente sur le tambour 2 commence. Sur la table 13, le rouleau 35 a été préalablement déplacé pour jouxter le rouleau de renvoi 34 et le pli dans la pièce 32 de matériau en feuille souple a été formé sous le rouleau 35 par le volet 42, la barre de lestage de la pièce 32 reposant sur les butées 39.

Dans une variante du procédé selon l'invention, c'est aussi à ce stade qu'un film souple destiné à former un fourreau pour contenir le faisceau de fibres résultant de l'enroulement de la nappe 19 est déposé sur le plateau 14, c'est-à-dire aussi sur la pièce de matériau en feuille 32, le long de l'ouverture 43, ce film ayant une largeur légèrement supérieure au diamètre du futur faisceau de fibres et une longueur sensiblement égale à celle de ce faisceau.

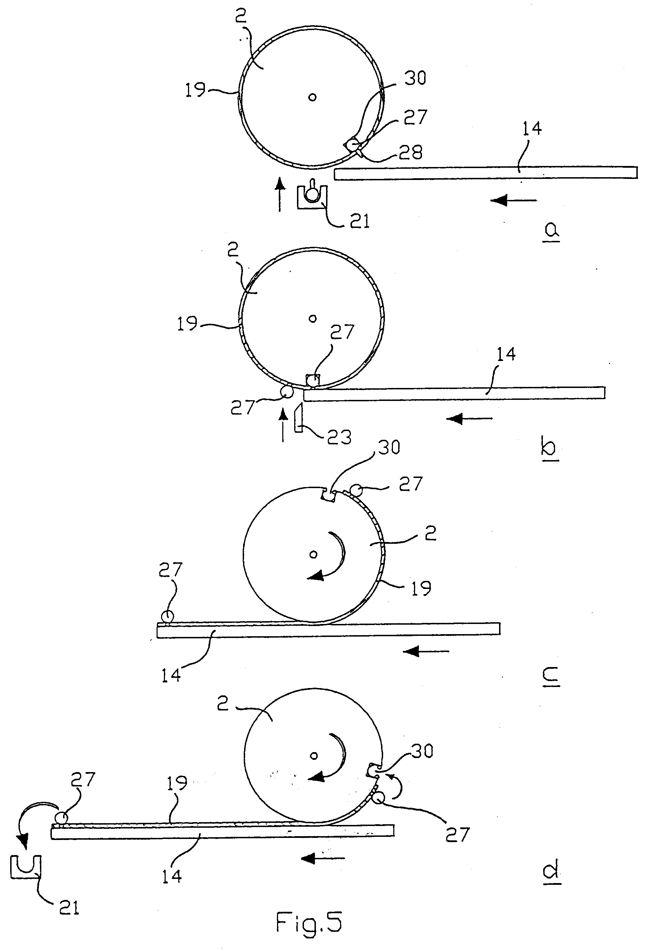

Ces préliminaires effectués, la table 13 avance en direction du tambour 2. Lorsque les moyens 21 pour la mise en place sur le tambour 2 de la barre 27 arrivent à l'aplomb de l'axe du tambour 2, la table 13 stoppe et le tambour tourne jusqu'à ce que les tétons 28 de la barre 27 se trouvent en regard des orifices 29 du tambour 2. La barre 27 est alors soulevée, les tétons 28 pénètrent dans les orifices 29 où ils sont verrouillés (figure 5a). La table 13 avance à nouveau tandis que le tambour 2 tourne légèrement jusqu'à ce que les tétons 28 de la barre 27 portée par le tambour pénètrent dans les orifices 31 du plateau 14 où ils sont verrouillés à leur tour. La nappe de fibres 19 est alors maintenue par rapport au tambour 2 sur deux zones linéaires parallèles voisines entre lesquelles l'organe de coupe 20 déplace la lame 23 pour couper la nappe 19 selon un trait de coupe rectiligne, parallèle à l'axe du tambour 2 (figure 5b). Etant maintenue de part et d'autre du trait de coupe, la nappe de fibres 19 ne se décolle pas du tambour 2, ce qu'elle ferait autrement. A ce stade, la denture 40 portée par le tambour 2 a commencé à engrener la crémaillère 41 portée par le plateau 14. De la sorte, la table 13 étant remise en marche, toujours dans la même direction, elle entraîne le tambour 2 en rotation, et la nappe 19 se déroule sur le plateau 14 (figure 5c). Ce mouvement provoque le dégagement, hors de la rainure 30 du tambour 2, de la barre 27 verrouillée au plateau 14. Lorsque le bord arrière de la table arrive au niveau du tambour 2, la barre 27 maintenant la nappe 19 plaquée sur le tambour est déverrouillée et enlevée du tambour 2 et elle est placée dans la rainure 30 du tambour. La barre 27 maintenant la nappe 19 plaquée sur le plateau 14 à l'autre extrémité de la table est également déverrouillée et enlevée de la table 13 et elle est placée dans le support élévateur 21. La nappe 19 est alors complètement déroulée sur le plateau 14 sur lequel elle repose simplement sans être maintenue en place d'aucune façon.

La table 13 est remise en marche en sens inverse. Lorsque la table 13 est sortie de la zone de pivotement des tambours 1, 2 autour de l'axe 5, elle stoppe. Lorsque le processus de formation d'une nappe de fibres 19 sur le tambour 1 est achevée, la permutation des tambours, qui a été décrite plus haut, peut donc être effectuée.

De manière indépendante, dès que la table 13 est stoppée, la nappe de fibres 19 est enroulée sur elle-même autour d'un axe parallèle à ses bords longitudinaux. Ce résultat est atteint par le déplacement, en direction de l'ouverture 43, du pli formé sous le rouleau 35 dans la pièce 32 de matériau en feuille, le bord de la nappe de fibres 19 situé en vis-à-vis s'engageant dans le pli et étant contraint de se replier sur lui-même pour former l'amorce d'un faisceau de fibres spiralé. Dès que le faisceau amorcé dans le pli a un diamètre supérieur à l'interstice entre le rouleau 35 et le plateau 14, la barre de lestage de la pièce 32 de matériau souple en feuille est libérée par effacement des butés mobiles 39 et une tension constante s'exerce sur la pièce 32, qui tend à diminer l'ampleur du pli et à resserrer le faisceau. Comme la distance entre le rouleau 35 et le plateau 14 est choisie proche de l'épaisseur de la nappe de fibres 19, le faisceau qui se forme dans le pli ne peut s'en échapper en dépit de la tension exercée par le poids des masses 33, qui est choisi en vue d'obtenir un faisceau de fibres ayant un diamètre déterminé.

Lorsque le rouleau mobile 35 arrive au niveau du bord longitudinal du plateau 14 portant la crémaillère 41, le faisceau de fibres formé dans le pli de la pièce 32 de matériau en feuille bascule dans l'ouverture 43 et tombe dans la goulotte 44.

Si un film souple destiné à former un fourreau pour contenir le faisceau de fibres 45 a été déposé sur le plateau 14 préalablement à l'étape de déroulement de la nappe de fibres 19 sur le plateau 14, ce film, à la fin de l'étape d'enroulement de la nappe de fibres 19 sur elle-même, enveloppe le faisceau de fibres 45. Alors que le faisceau de fibres 45 se trouve encore sur la table 13, l'enveloppe cylindrique constituée par le film est fermée sur elle-même par soudage ou collage de ses bords longitudinaux l'un à l'autre, la largeur du film étant prévue pour que ses bords se chevauchent.

Dès que le faisceau de fibres unique 45, enveloppé ou non dans un film, est tombé dans la goulotte 44, il est déplacé pas à pas par le convoyeur 46, selon un pas correspondant à la longueur des faisceaux individuels souhaités, en regard de la scie circulaire 47 qui le tronçonne en une pluralité de faisceaux individuels. Ces faisceaux, éventuellement après une phase de traitement ultérieur (centrifugation notamment quand ils sont remplis d'un liquide qu'il faut évacuer pour pouvoir les fixer dans des boîtiers d'appareil à membrane) sont introduits dans des boîtiers respectifs où ils sont fixés ensuite par collage.

Selon une variante de l'invention, quand le faisceau de fibres unique 45 obtenu sur la table 13 ne nécessite pas de traitement spécial avant fixation dans les boîtiers d'appareils à membrane, les boîtiers, qui sont tubulaires, sont enfilés les uns à la suite des autres sur le faisceau unique 45 qui est tronçonné ensuite à la jonction entre deux boîtiers consécutifs.

La présente invention n'est pas limitée à l'exemple de réalisation qui vient d'être décrit et elle est susceptible de variantes.

En particulier, dans le dispositif décrit, le déroulement, sur le plateau 14, de la nappe de fibres 19 présente sur le tambour 2 résulte d'une translation de la table 13, le tambour 2 restant fixe. L'inverse serait évidemment également possible pourvu que les deux tambours ne soient pas couplés.

D'autre part, on notera qu'avec le dispositif décrit, il n'est pas indispensable de prévoir deux moyens spécifiques (barres 27) pour immobiliser la nappe de fibres 19 selon deux zones linéaires en vue d'empêcher la nappe de décoller du tambour après avoir été coupée : il suffit de régler la distance entre le tambour 2 et le plateau 14 de façon que, au stade représenté sur la figure 5b, la nappe 19 soit légèrement coincée entre le tambour et le plateau.

La synchronisation mécanique des mouvements du tambour 2 et de la table 13 peut être remplacée par une synchronisation électronique pourvu que le tambour 2 soit muni d'un moteur, cette synchronisation étant alors réalisée au niveau de la commande des moteurs d'entraînement de la table 13 et du tambour 2.

Comme, selon la gamme des longueurs des faisceaux individuels que l'on souhaite fabriquer, il peut être difficile, au plan pratique, de prévoir des tambours ayant un diamètre égal à un multiple commun de ces longueurs, une variante intéressante de l'invention consiste à munir le dispositif de tambours 1, 2 ayant un diamètre réglable, ces tambours pouvant être constitués d'une pluralité d'éléments de tambours expansibles radialement.

## Revendications

1. Procédé de fabrication d'une pluralité de faisceaux de fibres creuses semi-perméables pour appareils à membrane à partir d'une nappe de fibres (19) formée par l'enroulement d'une fibre ou d'un toron de fibres (11) sur un tambour (1, 2), comprenant les étapes de :
- couper la nappe de fibres (19) sur le tambour (1, 2) selon un trait de coupe sensiblement parallèle à l'axe du tambour (1, 2) ;
- étendre la nappe de fibres (19) sur un plan (14) ;
- enrouler la nappe de fibres (19) sur elle-même selon une direction perpendiculaire au trait de coupe pour former un faisceau de libres unique (45) ;
- tronçonner le faisceau de fibres unique (45) en une pluralité de faisceaux pour appareils à membrane.

2. Procédé selon la revendication 1, caractérisé en ce que le faisceau de fibres (45) est placé dans un fourreau avant d'être tronçonné en une pluralité de faisceau de fibres.

3. Procédé selon la revendication 2, caractérisé en ce qu'un film souple destiné à former le fourreau pour contenir le faisceau de libres (45) est déposé sur le plan (14) préalablement à l'étape de déroulement de la nappe de fibres (19) sur le plan (14), de façon que ce film, à la fin de l'étape d'enroulement de la nappe de libres (19) sur elle-même, enveloppe le faisceau de libres (45), le film étant ensuite fermé sur lui-même par assujettissement de ses bords longitudinaux l'un à l'autre.

4. Procédé selon une des revendications 1 à 3, caractérisé en ce que, préalablement à l'étape de couper la nappe de fibres (19), la nappe de fibres (19) est immobilisée par rapport au tambour (1, 2) de part et d'autre d'une zone où passera le trait de coupe.

5. Procédé selon la revendication 4, caractérisé en ce que la nappe de fibres (19) est immobilisée par rapport au tambour (1, 2) sur deux zones sensiblement linéaires, une première zone étant définie par l'application de la nappe de fibres (19) contre le tambour (1, 2) selon une génératrice du tambour (1, 2) et la deuxième zone étant définie par l'application de la nappe de fibres (19) contre le plan (14) selon une ligne de tangence du tambour (1, 2) au plan (14).

6. Procédé selon une des revendications 1 à 5, caractérisé en ce que l'étape d'étendre la nappe de fibres (19) sur le plan (14) consiste à provoquer la rotation du tambour (1, 2) et un déplacement relatif simultané du tambour (1, 2) et du plan (14) selon une direction perpendiculaire à l'axe du tambour (1, 2), l'axe du tambour (1, 2) étant parallèle au plan (14).

7. Procédé selon la revendication 6, caractérisé en ce que le plan (14) est déplacé sensiblement tangentie[lement au tambour (1, 2).

8. Procédé selon une des revendications 1 à 7, caractérisé en ce que l'étape d'enrouler la nappe de fibres (19) sur elle-même consiste à :
- étendre la nappe de fibres (19) sur une pièce (32) de matériau en feuille souple ayant un bord fixe assujetti au plan (14) parallèlement à la direction de déplacement relatif du tambour (1, 2) et du plan (14) ;
- former un pli dans la pièce (32) de matériau souple en feuille sensiblement parallèle au bord fixe de la pièce (32) de matériau souple en feuille ;
- introduire un bord de la nappe de fibres (19) dans ce pli, et
- déplacer le pli en direction du bord fixe de la pièce (32) de matériau souple en feuille.

9. Procédé selon la revendication 8, caractérisé en ce que le diamètre du faisceau de fibres (45) est réglé par une tension exercée, sensiblement perpendiculairement au pli, sur la pièce (32) de matériau souple en feuille.

10. Procédé selon une des revendications 1 à 9 pour la fabrication d'une pluralité de faisceaux de fibres creuses destinés à des appareils comprenant un boîtier tubulaire pour contenir un faisceau, caractérisé en ce que, préalablement à l'étape de tronçonner le faisceau de fibres unique en une pluralité de faisceaux, un nombre correspondant de boîtiers tubulaires est enfilé à la suite les uns des autres sur le faisceau de fibres unique (45).

11. Dispositif de fabrication d'une pluralité de faisceaux de fibres creuses semi-perméables pour appareils à membrane à partir d'une nappe de fibres (19) formée sur un tambour (1, 2) rotatif, comprenant un organe de coupe (20) pour ouvrir la nappe de fibres (19) selon un trait de coupe sensiblement parallèle à l'axe de rotation du tambour (1, 2), caractérisé en ce qu'il comprend :
- des moyens (13, 17, 40, 41) pour transférer la nappe de fibres, une fois coupée, du tambour (1, 2) sur un plan (14), par déroulement de la nappe de fibres (19) sur le plan (14) selon une direction rectiligne ;
- des moyens (27) pour maintenir la nappe de fibres (19) plaquée au tambour (1, 2) sur une zone de ce tambour pendant le déroulement de la nappe de fibres (19) sur le plan (14) ;
- des moyens (32, 35, 36, 37) pour former un faisceau de fibres (45) unique à partir de la nappe de fibres (19) mise à plat, par enroulement de la nappe de fibres (19) sur elle-même autour d'un axe perpendiculaire au trait de coupe et constriction simultanée du faisceau de fibres (45) en cours de formation ; et
- des moyens (47) pour tronçonner le faisceau de fibres (45) résultant de l'enroulement de la nappe de fibres (19) sur elle-même en une pluralité de faisceaux de fibres pour appareils à membrane.

12. Dispositif selon la revendication 11, caractérisé en ce que les moyens pour transférer la nappe de fibres (19) sur un plan (14) comprennent une table mobile (13, 17) par rapport au tambour (1, 2) selon une direction perpendiculaire à l'axe de rotation du tambour (1, 2), cette table ayant un plateau (14) définissant le plan sur lequel est déroulé la nappe de fibres (19).

13. Dispositif selon une des revendications 11 ou 12, caractérisé en ce que les moyens pour former un faisceau de fibres (45) unique à partir de la nappe de fibres (19) mise à plat comprennent :
- une pièce (32) de matériau souple en feuille ayant un bord fixe assujetti au plan (14) parallèlement à la direction de déroulement de la nappe de fibres (19) sur le plan (14) ;
- des moyens (35, 36, 37, 42) pour former, dans cette pièce (32) de matériau souple en feuille, un pli sensiblement parallèle à ce bord fixe, et pour déplacer ce pli selon une direction perpendiculaire à la direction de déroulement de la nappe de fibres (19) sur le plan (14).

14. Dispositif selon la revendication 13, caractérisé en ce que les moyens pour former et déplacer un pli dans la pièce (32) de matériau souple en feuille comprennent un rouleau mobile (35, 36, 37) disposé à faible distance au-dessus du plan (14), ce rouleau étant sensiblement parallèle à la direction de déroulement de la nappe de fibres (19) sur le plan (14).

15. Dispositif selon la revendication 13 ou 14, caractérisé en ce que les moyens pour former un faisceau de fibres (45) unique à partir de la nappe de fibres (19) mise à plat comprennent en outre des moyens (33) pour régler le diamètre du faisceau de fibres (45) formé dans le pli.

16. Dispositif selon la revendication 15, caractérisé en ce que les moyens pour régler le diamètre du faisceau de fibres formé dans le pli comprennent des moyens (33) pour exercer une tension réglable sur un bord de la pièce (32) de matériau en feuille opposé à son bord fixe, selon une direction sensiblement perpendiculaire au pli.

17. Dispositif selon une des revendications 11 à 16, caractérisé en ce qu'il comprend en outre des moyens (27, 28, 29, 31) pour maintenir la nappe de fibres (19) par rapport au tambour (1, 2) de part et d'autre du trait de coupe.

18. Dispositif selon la revendication 17, caractérisé en ce que les moyens pour maintenir la nappe de fibres (19) par rapport au tambour (1, 2) comprennent une barre (27, 28) verrouillable au tambour (1, 2) parallèlement à son axe de rotation.

19. Dispositif selon la revendication 17 ou 18, caractérisé en ce que le tambour (1, 2) est sensiblement tangentiel au plateau (14) de la table (13) et en ce que les moyens pour maintenir la nappe de fibres (19) par rapport au tambour (1, 2) comprennent une barre (27, 28) verrouillable au plateau (14), logée de façon amovible dans une rainure (30) périphérique du tambour (1, 2), parallèle à l'axe de rotation du tambour (1, 2).

20. Dispositif selon une des revendications 11 à 19, caractérisé en ce qu'il comprend des moyens pour régler la longueur de la nappe de fibres (19).

21. Dispositif la revendication 20, caractérisé en ce que les moyens pour régler la longueur de la nappe de fibres sont constitués par des moyens pour régler le diamètre du tambour (1, 2).

22. Dispositif selon une des revendications 11 à 21, caractérisé en ce qu'il comprend deux tambours (1, 2) montés pour être positionnés alternativement en vis-à-vis du plan (14).

## Claims

1. A method of manufacturing a plurality of bundles of semipermeable hollow fibers for membrane devices from a sheet of fibers (19) formed by winding a fiber or a stranded set of fibers (11) on a drum (1, 2), the method comprising the steps of:
- cutting the sheet of fibers (19) on the drum (1, 2) along a line of cut that is substantially parallel to the axis of the drum (1, 2);
- laying out the sheet of fibers (19) on a plane (14);
- rolling up the sheet of fibers (19) in a direction perpendicular to the line of cut to form a single bundle of fibers (45); and
- cutting up the single bundle of fibers (45) into a plurality of bundles for membrane devices.

2. A method according to claim 1, characterized in that the bundle of fibers (45) is placed in a sheath prior to being cut up into a plurality of bundles of fibers.

3. A method according to claim 2, characterized in that a flexible film for forming the sheath that is to contain the bundle of fibers (45) is laid on the plane (14) prior to the step of laying the sheet of fibers (19) on the plane (14) so that at the end of the step of rolling up the sheet of fibers (19) the film envelops the bundle of fibers (45), the film then being closed onto itself by fixing together its longitudinal edges.

4. A method according to one of the claims 1 to 3, characterized in that prior to the step of cutting the sheet of fibers (19), the sheet of fibers (19) is held stationary relative to the drum (1, 2) on either side of a region along which the line of cut is to pass.

5. A method according to claim 4, characterized in that the sheet of fibers (19) is held stationary relative to the drum (1, 2) along two substantially linear regions, a first region being defined by pressing the sheet of fibers (19) against the drum (1, 2) along a generator line of the drum (1, 2), and the second region being defined by pressing the sheet of fibers (19) against the plane (14) along a line of tangency between the drum (1, 2) and the plane (14).

6. A method according to one of the claims 1 to 5, characterized in that the step of laying the sheet of fibers (19) on the plane (14) consists in causing the drum (1, 2) to rotate and in simultaneously causing relative displacement of the drum (1, 2) and the plane (14) in a direction perpendicular to the axis of the drum (1, 2), the axis of the drum (1, 2) being parallel to the plane (14).

7. A method according to claim 6, characterized in that the plane (14) is displaced substantially tangentially to the drum (1, 2).

8. A method according to one of the claims 1 to 7, characterized in that the step of rolling up the sheet of fibers (19) consists in:
- laying the sheet of fibers (19) on a piece of flexible sheet material (32) having a fixed edge held to the plane (14) parallel to the direction of relative displacement between the drum (1, 2) and the plane (14);
- forming a fold in the piece of flexible sheet material (32) substantially parallel to the fixed edge of the piece of flexible sheet material (32);
- inserting one edge of the sheet of fibers (19) into said fold; and
- displacing the fold towards the fixed edge of the piece of flexible sheet material (32).

9. A method according to claim 8, characterized in that the diameter of the bundle of fibers (45) is adjusted by tension exerted substantially perpendicularly to the fold in the piece of flexible sheet material (32).

10. A method according to one of claims 1 to 9, for manufacturing a plurality of bundles of hollow fibers for use in devices including tubular housings for containing respective bundles, characterized in that prior to the step of cutting up the single bundle of fibers into a plurality of bundles, a corresponding number of tubular housings is threaded one after another on the single bundle of fibers (45).

11. Apparatus for manufacturing a plurality of bundles of semipermeable hollow fibers for membrane devices from a sheet of fibers (19) formed on a rotary drum (1, 2), the apparatus comprising a cutting member (20) for cutting the sheet of fibers (19) along a line of cut substantially parallel to the axis of rotation of the drum (1, 2), characterized in that it comprises:
- means (13, 17, 40, 41) for transferring the sheet of fibers, after it has been cut, from the drum (1, 2) onto a plane (14), by laying out the sheet of fibers (19) onto the plane (14) in a rectilinear direction;
- means (27) for holding the sheet of fibers (19) against a region of the drum (1, 2) while laying out the sheet of fibers (19) onto the plane (14);
- means (32, 35, 36, 37) for forming a single bundle of fibers (45) from the flat sheet of fibers (19), by rolling up the sheet of fibers (19) about an axis perpendicular to the line of cut and by simultaneously constricting the bundle of fibers (45), while being formed; and
- means (47) for cutting up the bundle of fibers (45) that results from rolling up the sheet of fibers (19) into a plurality of bundles for membrane devices.

12. Apparatus according to claim 11, characterized in that the means for transferring the sheet of fibers (19) on a plane (14) comprise a table (13, 17) that is movable relative to the drum (1, 2) in a direction perpendicular to the axis of rotation of the drum (1, 2), the table having a table top (14), defining the plane on which the sheet of fibers (19) is laid.

13. Apparatus according to one of the claims 11 and 12, characterized in that the means for forming a single bundle of fibers (45) from the flat sheet of fibers (19) comprise:
- a piece of flexible sheet material (32) having a fixed edge held to the plane (14) parallel to the direction in which the sheet of fibers (19) is laid on the plane (14); and
- means (35, 36, 37, 42) for forming a fold in the piece of flexible sheet material (32) substantially parallel to said fixed edge, and for displacing the fold in a direction perpendicular to the direction in which the sheet of fibers (19) is laid on the plane (14).

14. Apparatus according to claim 13, characterized in that the means for forming and displacing a fold in the piece of flexible sheet material (32) comprise a moving roller (35, 36, 37) disposed a short distance above the plane (14), the roller extending substantially parallel to the direction in which the sheet of fibers (19) is laid onto the plane (14).

15. Apparatus according to claim 13 or 14, characterized in that the means for forming a single bundle of fibers (45) from the flat sheet of fibers (19) further include means (33) for adjusting the diameter of the bundle of fibers (45) formed in the fold.

16. Apparatus according to claim 15, characterized in that the means for adjusting the diameter of the bundle of fibers formed in the fold comprise means (33) for exerting an adjustable tension on the edge of the piece of flexible sheet material (32) opposite to its fixed edge and in a direction which is substantially perpendicular to the fold.

17. Apparatus according to one of the claims 11 to 16, characterized in that it further includes means (27, 28, 29, 31) for holding the sheet of fibers (19) relative to the drum (1, 2) on either side of the line of cut.

18. Apparatus according to claim 17, characterized in that the means for holding the sheet of fibers (19) relative to the drum (1, 2) comprise a bar (27, 28) lockable to the drum (1, 2) parallel to its axis of rotation.

19. Apparatus according to claim 17 or 18, characterized in that the drum (1, 2) is substantially tangential to the top (14) of the table (13), and characterized in that the means for holding the sheet of fibers (19) relative to the drum (1, 2) comprise a bar (27, 28) which is lockable to the table top (14), and which is removably received in a peripheral groove (30) of the drum (1, 2) parallel to the axis of rotation of the drum (1, 2).

20. Apparatus according to one of the claims 11 to 19, characterized in that it includes means for adjusting the length of the sheet of fibers (19).

21. Apparatus according to claim 20, characterized in that the means for adjusting the length of the sheet of fibers are constituted by means for adjusting the diameter of the drum (1, 2).

22. Apparatus according to one of the claims 11 à 21, characterized in that it includes two drums (1, 2) mounted to be positioned facing the plane (14) in alternation.

## Patentansprüche

1. Verfahren zur Herstellung mehrerer Bündel von semipermeablen Hohlfasern für Membranvorrichtungen aus einer durch Wickeln einer Faser oder eines Seils (11) aus Fasern auf eine Trommel (1, 2) gebildeten Faserbahn (19), das die folgenden Schritte umfaßt:
- Schneiden der Faserbahn (19) auf der Trommel (1, 2) gemäß einer im wesentlichen parallel zur Achse der Trommel (1, 2) verlaufenden Schnittlinie;
- Ausbreiten der Faserbahn (19) auf einer Ebene (14);
- Wickeln der Faserbahn (19) um sich selbst gemäß einer senkrecht zur Schnittlinie verlaufenden Richtung zur Bildung eines einzelnen Faserbündels (45);
- Trennen des einzelnen Faserbündels (45) in mehrere Bündel für Membranvorrichtungen.

2. Verfahren nach Anspruch 1, dadurch gekennzeichnet, daß das Faserbündel (45) vor dem Trennen in mehrere Faserbündel in eine Hülse plaziert wird.

3. Verfahren nach Anspruch 2, dadurch gekennzeichnet, daß ein flexibler Film, der dazu bestimmt ist, die Hülse zur Aufnahme des Faserbündels (45) zu bilden, vor dem Schritt des Abwickelns der Faserbahn (19) auf die Ebene (14) derart auf der Ebene (14) angeordnet wird, daß dieser Film am Ende des Schrittes des Wickelns der Faserbahn (19) um sich selbst das Faserbündel (45) umhüllt, wobei der Film danach durch Befestigung seiner Längsränder aneinander geschlossen wird.

4. Verfahren nach einem der Ansprüche 1 bis 3, dadurch gekennzeichnet, daß die Faserbahn (19) vor dem Schritt des Schneidens der Faserbahn (19) bezüglich der Trommel (1, 2) auf beiden Seiten eines Bereichs, den die Schnittlinie durchläuft, festgelegt wird.

5. Verfahren nach Anspruch 4, dadurch gekennzeichnet, daß die Faserbahn (19) bezüglich der Trommel (1, 2) in zwei im wesentlichen linearen Bereichen festgelegt wird, wobei ein erster Bereich durch Aufbringen der Faserbahn (19) auf die Trommel (1, 2) gemäß einer Erzeugenden der Trommel (1, 2) definiert wird und der zweite Bereich durch Aufbringen der Faserbahn (19) auf die Ebene (14) gemäß einer Berührungslinie der Trommel (1, 2) mit der Ebene (14) definiert wird.

6. Verfahren nach einem der Ansprüche 1 bis 5, dadurch gekennzeichnet, daß der Schritt des Ausbreitens der Faserbahn (19) auf der Ebene (14) darin besteht, die Drehung der Trommel (1, 2) und eine gleichzeitige Relativverschiebung der Trommel (1, 2) und der Ebene (14) gemäß einer senkrecht zur Achse der Trommel (1, 2) verlaufenden Richtung zu bewirken, wobei die Achse der Trommel (1, 2) parallel zur Ebene (14) verläuft.

7. Verfahren nach Anspruch 6, dadurch gekennzeichnet, daß die Ebene (14) im wesentlichen tangential zur Trommel (1, 2) verschoben wird.

8. Verfahren nach einem der Ansprüche 1 bis 7, dadurch gekennzeichnet, daß der Schritt des Wickelns der Faserbahn (19) um sich selbst aus folgendem besteht:
- Ausbreiten der Faserbahn (19) auf einem Stück (32) aus flexiblem Folienmaterial mit einem festen Rand, der parallel zur relativen Verschiebungsrichtung der Trommel (1, 2) zur Ebene (14) an der Ebene (14) befestigt wird;
- Bilden einer Falte in dem Stück (32) aus flexiblem Foliematerial, die im wesentlichen parallel zum festen Rand des Stücks (32) aus flexiblem Folienmaterial verläuft;
- Einführen eines Rands der Faserbahn (19) in diese Falte und
- Verschieben der Falte in Richtung des festen Rands des Stücks (32) aus flexiblem Folienmaterial.

9. Verfahren nach Anspruch 8, dadurch gekennzeichnet, daß der Durchmesser des Faserbündels (45) durch eine im wesentlichen senkrecht zur Falte auf das Stück (32) aus flexiblem Folienmaterial ausgeübte Spannung eingestellt wird.

10. Verfahren nach einem der Ansprüche 1 bis 9 zur Herstellung mehrerer Hohlfaserbündel, die für Membranvorrichtungen, die ein röhrenförmiges Gehäuse zur Aufnahme eines Bündels enthalten, bestimmt sind, dadurch gekennzeichnet, daß eine entsprechende Anzahl röhrenförmiger Gehäuse vor dem Schritt des Trennens des einzelnen Faserbündels in mehrere Bündel nacheinander auf das einzelne Faserbündel (45) gefädelt wird.

11. Vorrichtung zur Herstellung mehrerer Bündel von semipermeablen Hohlfasern für Membranvorrichtungen aus einer auf einer Drehtrommel (1, 2) gebildeten Faserbahn (19), mit einem Schneidglied (20) zum Öffnen der Faserbahn (19) gemäß einer im wesentlichen parallel zur Drehachse der Trommel (1, 2) verlaufenden Schnittlinie, dadurch gekennzeichnet, daß sie folgendes umfaßt:
- Mittel (13, 17, 40, 41) zum Überführen der Faserbahn nach dem Schneiden von der Trommel (1, 2) auf eine Ebene (14) durch Abwickeln der Faserbahn (19) auf die Ebene (14) gemäß einer geradlinigen Richtung;
- Mittel (27) zum Halten der an die Trommel (1, 2) gepreßten Faserbahn (19) in einem Bereich dieser Trommel während des Abwickelns der Faserbahn (19) auf die Ebene (14);
- Mittel (32, 35, 36, 37) zum Bilden eines einzelnen Faserbündels (45) aus der flach hingelegten Faserbahn (19) durch Wickeln der Faserbahn (19) um eine senkrecht zur Schnittlinie verlaufende Achse um sich selbst und gleichzeitiges Verengen des Faserbündels (45) im Verlauf der Bildung und
- Mittel (47) zum Trennen des sich aus dem Wickeln der Faserbahn (19) um sich selbst ergebenden Faserbündels (45) in mehrere Faserbündel für Membranvorrichtungen.

12. Vorrichtung nach Anspruch 11, dadurch gekennzeichnet, daß die Mittel zum Übertragen der Faserbahn (19) auf eine Ebene (14) einen Tisch (13, 17) umfassen, der bezüglich der Trommel (1, 2) gemäß einer senkrecht zur Drehachse der Trommel (1, 2) verlaufenden Richtung beweglich ist, wobei dieser Tisch eine die Ebene, auf die die Faserbahn (19) abgewickelt wird, definierende Platte (14) aufweist.

13. Vorrichtung nach Anspruch 11 oder 12, dadurch gekennzeichnet, daß die Mittel zum Bilden eines einzelnen Faserbündels (45) aus der flach hingelegten Faserbahn (19) folgendes umfassen:
- ein Stück (32) aus flexiblem Folienmaterial mit einem festen Rand, der parallel zur Abwickelrichtung der Faserbahn (19) auf die Ebene (14) an der Ebene (14) befestigt ist;
- Mittel (35, 36, 37, 42) zum Bilden einer zu diesem festen Rand im wesentlichen parallel verlaufenden Falte in diesem Stück (32) aus flexiblem Folienmaterial und zum Verschieben dieser Falte gemäß einer senkrecht zur Abwickelrichtung der Faserbahn (19) auf die Ebene (14) verlaufenden Richtung.

14. Vorrichtung nach Anspruch 13, dadurch gekennzeichnet, daß die Mittel zum Bilden und Verschieben einer Falte in dem Stück (32) aus flexiblem Folienmaterial eine bewegliche Rolle (35, 36, 37) umfassen, die im geringen Abstand über der Ebene (14) angeordnet ist, wobei diese Rolle im wesentlichen parallel zur Abwickelrichtung der Faserbahn (19) auf die Ebene (14) liegt.

15. Vorrichtung nach Anspruch 13 oder 14, dadurch gekennzeichnet, daß die Mittel zum Bilden einer einzelnen Faserbündel (45) aus der flach hingelegten Faserbahn (19) des weiteren Mittel (33) zum Einstellen des Durchmessers des in der Falte gebildeten Faserbündels (45) umfassen.

16. Vorrichtung nach Anspruch 15, dadurch gekennzeichnet, daß die Mittel zum Einstellen des Durchmessers des in der Falte gebildeten Faserbündels Mittel (33) zum Ausüben einer einstellbaren Spannung auf einen Rand des Stücks (32) aus flexiblem Folienmaterial, der dessen festem Rand gegenüberliegt, gemäß einer im wesentlichen senkrecht zur Falte verlaufenden Richtung umfassen.

17. Vorrichtung nach einem der Ansprüche 11 bis 16, dadurch gekennzeichnet, daß sie des weiteren Mittel (27, 28, 29, 31) zum Halten der Faserbahn (19) bezüglich der Trommel (1, 2) auf beiden Seiten der Schnittlinie umfaßt.

18. Vorrichtung nach Anspruch 17, dadurch gekennzeichnet, daß die Mittel zum Halten der Faserbahn (19) bezüglich der Trommel (1, 2) einen an der Trommel (1, 2) parallel zu deren Drehachse verriegelbaren Stab (27, 28) umfassen.

19. Vorrichtung nach Anspruch 17 oder 18, dadurch gekennzeichnet, daß die Trommel (1, 2) im wesentlichen tangential zur Platte (14) des Tisches (13) liegt und das die Mittel zum Halten der Faserbahn (19) bezüglich der Trommel (1, 2) einen an der Platte (14) verriegelbaren Stab (27, 28) umfassen, der in einer parallel zur Drehachse der Trommel (1, 2) verlaufenden Umfangsnut (30) der Trommel (1, 2) lösbar untergebracht ist.

20. Vorrichtung nach einem der Ansprüche 11 bis 19, dadurch gekennzeichnet, daß sie Mittel zum Einstellen der Länge der Faserbahn (19) umfaßt.

21. Vorrichtung nach Anspruch 20, dadurch gekennzeichnet, daß die Mittel zum Einstellen der Länge der Faserbahn aus Mitteln zum Einstellen des Durchmessers der Trommel (1, 2) bestehen.

22. Vorrichtung nach einem der Ansprüche 11 bis 21, dadurch gekennzeichnet, daß sie zwei Trommeln (1, 2) umfaßt, die so angebracht sind, daß sie abwechselnd gegenüber der Ebene (14) positioniert werden können.
